# EUROPEAN PATENT APPLICATION

(11) **EP 1 878 712 A1**
(43) Date of publication of application: **16.01.2008**
(21) Application number: 05717226.4
(22) Date of filing: 22.03.2005
(51) Int. Cl.: C04B 26/06

(54) **METHOD OF PRODUCING ARTIFICIAL STONE SLABS WITH METHACRYLATE RESIN FOR EXTERNAL USE BY MEANS OF VIBRO-COMPRESSION UNDER VACUUM**

(71) Applicant: COSENTINO, S.A., E-04867 Macael (Almería) (ES)
(72) Inventor: CRUZ, Juan, c/o COSENTINO, S.A., E-04867 Macael (Almería) (ES)
(74) Representative: Gonzalez-Alberto Rodriguez, Natalia
(86) International application number: PCT/ES2005/000152
(87) International publication number: WO 2006/100321

(57) **Abstract**

The invention relates to a process for manufacturing artificial stone boards especially suitable for outdoors comprising the phases of:
- grinding of the different materials with varied granulometry forming the filler,
- containing the resin with the catalyst and optionally the resin,
- a moulding and compaction phase of the obtained paste by vibro-compression under vacuum, and
- a hardening phase by polymerization of the resin by means of heat, ending with a cooling and polishing phase.

## Description

### Field of the Art

The present invention relates to a process for manufacturing boards that are especially suitable for outdoors, based on artificial stone bound only with methacrylate-type liquid resin, the main application of which is its outdoor placing: external facades, staircases and floors, and the like, also being able to be used indoors, both in kitchens and bathrooms and staircases and floors.

### State of the Art

The process marketed by Breton S.p.A (Italy) who developed the technology called "Breton Stone" is described in the US patent 4,698,010 (Marcello Toncelli, October 6, 1987) in which aggregates of a material of variable particle size are mixed with a binder (organic or inorganic), and after said mixture has been homogenized it is discharged into a mould which, in turn, is transferred to the interior of a press where it is subjected to pressure and vibration under vacuum, the mixture being hardened and giving as a result blocks that can be cut into others of smaller dimensions.

Patent ES 2 009 685 (Roberto Dalla Valle, October 1, 1989, describes a process for obtaining artificial stones for pavements and coatings, comprising a grinding phase of marble materials, a mixing phase of this material together with diverse substances and polymerizable resin (polyester), a moulding phase of the obtained paste by vibro-compression under vacuum, and a polymerization phase for hardening the resin, characterized by the fact that any type of ground marble with a maximum granulometry of 7 mm and silica sand which has undergone a strong heating intervene in the mixing.

Patent EP 0 521 286 A (Frank Martiny, January 7, 1993) describes a binder-containing coating rectified on its surface and formed by a mixture of binding material, supplementary materials as well as additional glass characterized in that the glass elements are mirror-coated, and can be granulated or have different colours, conferring a chromatic effect to the coating. Additionally the mixture can also contain metal elements, such as for example, of brass or copper, which reflect light when it falls on them.

Patent JP 06-218829 (Mitsubishi Rayon Co. Ltd., August 9, 1994) describes a process for mixing 85-95% by weight of natural stone with an acrylic binding resin. The mould is filled with this mixture subjected to vibration under vacuum. The mould hardens at room temperature or with heat and at least one of its faces is polished. The purpose is to obtain an improved product with respect to abrasion, resistance to scratching and time, with an artificial mixture having the appearance of natural stone. The synthetic resin used is a mixture of an acrylic monomer, an acrylic polymer and an ester of a polyfunctional acrylic monomer, giving a long list of possibilities for each of the three components of the resin.

US patent 5,800,752 (Charlebois Technologies Inc., September 1, 1998) describes a process and apparatus for manufacturing polymer composite products including the steps of distributing a pre-determined amount of a mixture of filler and polymeric binder in a mould; characterized by the curing of the mixture by simultaneous application of heat, pressure and vibration for a time sufficient to (a) form a skin of cured polymer around the mixture of filler and polymeric binder: (b) minimize boiling and evaporation of the polymeric binder; and (c) evenly distribute the filler in the mould such that the polymer composite product formed is substantially void-free. The example describes a composition containing vinyl ester (polymer) and methyl methacrylate (monomer). The object of the invention is to obtain a shorter process, in a single step and by which the curling and cracking of the obtained products are reduced.

US patent 6,387,985 (Steven P. Wilkinson et al., May 14, 2002) describes a composition for surfacing materials comprising a) 5% to 15% of an acrylic resin wherein the degree of cross-linking is controlled by addition of 0.5% to 10%, by weight, of a tri-functional acrylic monomer; and b) 85% to 95% of a filler comprised of ground natural stone. The acrylic resin comprises (i) 20 to 65 parts of an ethylenically unsaturated monomer; (ii) 5 to 65 parts of an acrylic oligomer; (iii) 15 to 30 parts of an acrylic polymer; (iv) 1 to 5 parts of a tri-functional acrylic monomer; (v) 1 to 2 parts peroxide initiator; (vi) 0.01 to 20 parts pigment; and (vii) 1 to 2 parts of a silane as a binding agent. Said composition entails an improved impact resistance compared to compositions with polyester of the state of the art.

The product marketed as SILESTONE, formed by a binder of natural quartz and pigmented crystal and bound with polyester resin, is based on patent ES 2 187 313 A (of the authors of the present application, June 1, 2003) describing a process for manufacturing artificial stone boards especially applicable to decoration that starts from a mixture of ground materials of different granulometry of silica, glass, granite, quartz, ferrosilicon and/or other materials such as plastics, marbles and metals with liquid state polyester resins containing pigments, a cobalt accelerator and a catalyst acting with heat. The process starts in storage tanks wherein the preaccelerated liquid state polyester resin and the mixture of ground materials of variable granulometry are mixed at room temperature and are passed to the mixer, and once the mixture has been homogenized, they are passed by means of a conveyor belt to the pressing area where the mass necessary for forming the board is distributed, said mass passing to the vibro-compression under vacuum press and from there, they go to the catalysis oven the temperature of which is approximately 85°C for approximately 25 minutes. After cooling, the board follows the traditional calibrating, polishing and cutting process.

### Explanation of the Invention

The invention is a process for manufacturing artificial stone boards especially suitable for outdoors comprising a grinding phase of the different materials of varied granulometry forming the filler, another phase containing the resin with the catalyst, the accelerator, the binder or silane and optionally the colouring and an ultraviolet light absorber compatible with the resin, as well as any antioxidant; the mixing of said phases until homogenization of the materials with the resin; a moulding and compaction phase of the obtained paste by vibro-compression under vacuum, and a hardening phase by polymerization of the resin by means of heat; ending with a cooling and polishing phase, characterized by the fact that the polymerizable resin is formed only by the liquid methacrylate resin.

The invention also includes boards obtained by said process.

### Detailed Description and Preferred Embodiment of the Invention

The use of stone material, be it natural or artificial, ground or mixed with a binder substance, followed by compaction in a vibro-compression under vacuum press is a common process in various inventions for obtaining boards, generally for indoors. As binder substances, mainly polyester and epoxy resins have been used, Wilkinson (see prior state of the art) being the one who uses an acrylic resin mixture formed by acrylic monomer, acrylic oligomer and acrylic polymer together with a trifunctional acrylic monomer, the concentration of the latter being the one controlling the polymerization. Thus, with the suitable amounts of said ingredients in the acrylic resin mixture, a board is obtained having improved properties of impact resistance with respect to traditional compositions with polyester, phenol, epoxy resins etc.

In view of the drawbacks of the boards of the state of the art for outdoor applications and in view of the demand of these products for their placing in external facades, floors and staircases and considering that Spain is a country with a high number of hours of sunlight both in summer and in winter, the authors of the present invention have tried to solve the mentioned drawbacks. As a result, the authors of this patent application have found surprisingly that when the liquid resin is limited only to methacrylate, the resulting boards have a lower degradation over time outdoors and especially a much higher resistance to rays of sunlight than the boards manufactured with polyester resin or mixtures, maintaining a bending coefficient, resistance to scratching and impact resistance that are comparable to the latter.

The manufacturing process is similar to patent ES 2 187 313, already mentioned, which is based on the fact that the binder used is polyester resin, changing several details in order to adapt the process to the nature of the methacrylate resin.

The different phases and the process are described below:

### Filler phase

In order to obtain the outdoor boards object of the invention, materials of varied granulometry forming part of the filler, among others, marble, dolomite, opaque quartz, crystalline quartz, silica, crystal, mirror, cristobalite, granite, feldspar, basalt, ferrosilicon etc. can be used, i.e. mineral materials found in nature, as long as they are compatible with the methacrylate resin. Other filler materials can also be used, in the same granulometry as the materials indicated previously, such as coloured plastics, metals, woods, graphite etc.

The part of the filler used to obtain a specific decorative effect can be intimately mixed with the rest of the filler of similar granulometry or it can be located on the surface afterwards.

The mentioned materials form part of the composition with the following granulometry:
a) 10% to 60% of the filler, of micronized or ground powder, with a granulometry comprised between 0.10 mm and 0.60 mm;
b) 1% to 80% of the filler, ground with a granulometry comprised between 0.61 mm and 1.20 mm; and optionally,
c) 10% to 50% of the filler, ground with a granulometry comprised between 1.21 mm and 15 mm.

The percentage of each granulometry depends on the use of the board to be obtained, said percentages varying according to the colour and visual effect desired.

### Resin phase

The methacrylate resin is a transparent material acting like a cement which strongly unites the remaining components. The curing of the resin is carried out by raising the temperature of the mould progressively and in a controlled manner. The process ends with a high temperature curing which minimizes the possible surface faults and assures the properties of the product, obtaining boards that are very resistant to ultraviolet rays.

Methacrylate liquid resin is present in the composition object of the invention in between 6 % and 20 % by weight in the total mixture. Said liquid methacrylate resin can have a viscosity comprised between 200 and 2000 centipoises (TYPE A) or it can be a mixture of 90-99% of a methacrylate resin of viscosity of said type A and 1-10% of a methacrylate resin of viscosity less than 200 centipoises (TYPE B). Polymethyl methacrylate, methyl methacrylate or 2,2-ethylenedioxydiethyl dimethacrylate can be used as TYPE A resin and propylidenetrimethyl trimethacrylate, for example, can be used as TYPE B.

The following ingredients are added to the methacrylate liquid resin phase before it is mixed with the filler:
a) 0.5% to 5% of the weight of the resin of one or more polymerization catalysts or initiators. The catalyst can be any compound producing free radicals, known in the state of the art. Peroxides and peroxydicarbonates are preferred. They can be powdered (for example, dilauryl peroxide or di-(4-tert-butyl-cyclohexyl) peroxydicarbonate or a mixture of both, or liquid (for example, tert-butyl perbenzoate or tert-butyl peroxy-2-ethylhexanoate or a mixture of both)
b) 0.05% to 0.5% of the weight of the resin of a polymerization accelerator, using a cobalt compound derived from caprylic acid, such as for example, 6% cobalt octoate.
c) 0.5% to 5% of the weight of the resin of a binder which is the cohesion agent between the resin and the fillers of varied granulometry of the mixture. Said binder can be an organofunctional silane because silanes are agents acting on the surface of two dissimilar phases and working as the union between both. The preferred silane for this invention is the gamma-methacryloxypropyltrimethoxysilane, although it can be other organosilane esters
d) 0.1% to 2% of the weight of the resin of ultraviolet radiation absorbing agents and antioxidizing agents that are compatible with the resin. Benezotriazoles and benzophenones, such as for example 2-benzotriazole-2-yl-4-6-di-tert-butylphenol, 2-(2H-benzotriazole-2-yl)-6-dodecyl-4-methyl-phenol and 2-hydroxy-4-(octal-oxy)-phenyl methanone can be used as ultraviolet radiation absorbing agents.
e) 0.05% to 10% of the weight of the resin of one or more colourings that can be micronized solid pigments with a granulometry less than 0.7 mm, both inorganic pigments, for example, iron oxides (red, yellow, brown, black), chromium oxide (green), carbon black (UV stabilizing black), titanium dioxide (white) and the like, and inorganic pigments, for example, phthalocyanines (blue and green) azo compounds (red) and bisazo compounds (yellow) being able to be used. Liquid colourings can also be used similar to the solids dissolved in a vehicle compatible with the resin to be used, such as for example, diallyl phthalate, methacrylate monomer or the resin itself to be used.

### Preferred compositions

The preferred compositions for the artificial stone boards, especially suitable for outdoors, manufactured according to the process of the invention comprise:

| | | |
|---|---|---|
| silica micronisate (quartz) | | 10-40% |
| ground silica (quartz), 0.1-0.60 mm | | 10-40% |
| ground silica (quartz), 0.61-1.20 mm | | 1-80% |
| methacrylate resin* | | 6-20% |
| *the resin can be | :TYPE A | (100%) |
| | TYPE A | (90-99%) + TYPE B (1-10%) |

Furthermore, with respect to the weight of the resin, the mixture contains:

| | |
|---|---|
| Catalyst | 0.5.5% |
| Accelerator | 0.05-0.5% |
| Binder | 0.5-5% |
| UV radiation absorbers | 0.1-2% |
| Colouring | 0.05-10% |

Two especially preferred formulations would be TYPE A FORMULATION:

| | |
|---|---|
| silica micronisate (quartz) | 25% |
| ground silica (quartz), 0.1-0.60 mm | 20% |
| ground silica (quartz), 0.61-1.20 mm | 45% |
| methacrylate resin*(95% TYPE A + 5% TYPE B) | 10% |

| *it contains (with respect to the weight of the resin): | |
|---|---|
| di(4-tert-butyl-cyclohexyl) peroxydicarbonate | 1% |
| tert-butyl perbenzoate | 1% |
| gamma-methacryloxypropyltrimethoxysilane | 1% |
| cobalt octoate | 0.1% |
| 2-benzotriazole-2-yl-4-6-di-tert-butylphenol | 0.5% |
| black iron oxide pigment (powder) | 1% |
| carbon black pigment (powder) | 0.5% |
| green chromium oxide pigment (powder) | 3% |

And TYPE B FORMULATION:

| | |
|---|---|
| silica micronisate (quartz) | 25% |
| ground mirror, 0.1-0.60 mm | 20% |
| ground mirror, 0.61-1.20 mm | 15% |
| ground mirror, 1.21-3.00 mm | 30% |
| methacrylate resin* (100% TYPE A) | 10% |

| *it contains (with respect to the weight of the resin): | |
|---|---|
| tert-butyl peroxy-2-ethylhexanoate | 1% |
| tert-butyl perbenzoate | 1% |
| gamma-methacryloxypropyltrimethoxysilane | 1% |
| cobalt octoate | 0.1% |
| 2-(2H-benzotriazole-2-yl)-6-dodecyl-4-methylphenol | 0.5% |
| titanium dioxide (liquid) | 6% |
| red colouring (liquid) | 2% |
| yellow colouring (liquid) | 3% |

### Process

Very different types of boards can be manufactured with the process of the invention, including cubical blocks of, for example, 150 cm x 150 cm x 100 cm (width x length x height). The preferred size, depending on its application is comprised between 60 cm x 60 cm and 300 cm x 150 cm of surface area with a thickness of 0.5 cm to 10 cm.

As many mixers and different colours are used for carrying out the mixtures as are necessary for obtaining the final colour depending on the effect desired. Said mixers are of the planetary, circular type.

The process begins with the weighing of the mineral fillers of the different ground materials and they are led to the mixers. Once inside the mixers, they are mixed for 60 seconds.

Independently, from a resin storage tank, the resin is weighed in independent weights, as many as the mixers that are going to be used, to which suitable additives and colourings for each mixer are added.

Once the different ground materials have been mixed in the mixers, a resin already weighed and prepared with all its additives and colour is added to each mixer, everything being mixed for 10 to 15 minutes.

If the catalysts are liquids, they are added to the resin at room temperature, and if they are solids, after the resin has been heated to 40-50°C.

Once the mixing has been carried out in each mixer, all the material is unloaded from the mixers, layer upon layer, on a homogenizer (Ring) the purpose of which being that the material, in its unloading from the mixers, is distributed homogeneously and layer by layer without any layer dominating the rest, being distributed uniformly and all the mixture colours manufactured in the planetary mixers being defined.

After the homogenization of the mixture has been carried out, the latter is distributed in the frames for making the boards of the desired measurements. Once the mixture has been coupled in the mould, it is led to a vibro-compaction under vacuum press responsible for compressing and compacting the material, for which it first carries out a vacuum by removing the air and then pressing the material by vibro-compression with a power of 6 kg/cm² during the entire process for approximately 2 to 3 minutes.

Once the board has been compressed, it is passed to a catalysis oven so that it hardens. The temperature of the oven must be between 70°C and 110°C. Since the methacrylate resin does not polymerize uniformly, in contrast to polyester and epoxy resins, and forms a foam when it polymerizes, the heating process must be very controlled in order to avoid the formation of pores in the surface of the resin once it has polymerized. Thus, heat transmission is carried out by heating hollow plates with diathermal oil, plates which compress the compacted board at the same time as they transmit heat to it so that it hardens.

The time that each board remains in the oven is of 30 to 60 minutes, after which it is removed from the oven and stored for 24 to 48 hours so that it cools.

The so-finished board is compact and uniform on all its faces, i.e., the edge has the same uniformity as the upper or lower faces.

Subsequently, it is treated in the same way as a conventional marble or granite, i.e. it is calibrated, polished and cut to the desired measurements.

Examples 1 and 2 describe the manufacturing process of the embodiments representing the invention for obtaining boards especially suitable for outdoors with methacrylate resin.

### Example 1

Artificial stone boards especially suitable for outdoors are manufactured according to the following process corresponding to the type A Formulation:

250 kg of silica micronisate (quartz); 200 kg of ground silica (quartz) of granulometry between 0.1 mm and 0.60 mm, and 450 kg of ground silica (quartz) of granulometry between 0.61 mm and 1.20 mm were mixed, the mixture being distributed between three planetary circular mixers. A colouring is added to each one of the mixers, 1000 g of powdered black iron oxide pigment is added to the first, 500 g of powdered carbon black pigment to the second and 3000 g of powdered green chromium oxide pigment to the third, an initial mixing being carried out for 30 seconds.

In other tanks, as many are used as the mixers, a total of 95 kg of METHYL METHACRYLATE (TYPE A resin) and 5 kg of PROPYLIDENETRIMETHYL TRIMETHACRYLATE (TYPE B resin) are mixed, 1000 g of silane (gamma-methacryloxypropyltrimethoxysilane); 100 g of cobalt octoate; 1000 g of di(4-tert-butyl-cyclohexyl) peroxydicarbonate; 1000 g of tert-butyl perbenzoate; and 500 g of 2-benzotriazole-2-yl-4-6-di-tert-butylphenol being added, the mixture being distributed according to the load of the mixers used.

The resin fillers with the additives, are poured into the corresponding mixer and mixed for 15 minutes.

Once the mixing has been carried out in each mixer, the entire group is unloaded, layer upon layer, on to a homogenizer (Ring), the purpose of which being that the material, in its unloading from the mixers, is distributed homogeneously and layer by layer without any layer dominating the rest, being distributed uniformly and all the mixture colours manufactured in the planetary mixers being defined.

The mixture is distributed in boards of 308 cm x 139 cm and a thickness of 2 cm, which pass to the press wherein the vacuum will be carried out and the boards will be compressed to 6 kg/cm², being compacted by vibro-compression. This process lasts 2.5 minutes. Subsequently, the boards are passed to the catalysis oven which is at 80°C, wherein they will remain for 30 minutes, passing afterwards to the cooling area, where, after 40 hours, they were calibrated, polished and cut by conventional methods.

### Example 2

Artificial stone boards especially suitable for outdoors are manufactured according to the following process corresponding to the type B Formulation:

250 kg of silica micronisate (quartz); 200 kg of ground mirror of granulometry between 0.1 mm and 0.60 mm, and 150 kg of ground mirror of granulometry between 0.61 mm and 1.20 mm, and 300 kg of ground mirror of granulometry between 1.21 mm and 3.00 mm were mixed, the mixture being distributed between three planetary circular mixers, a pre-mixing being carried out for 30 seconds.

In other tanks, as many as the mixers that are used, a total of 100 kg of METHYL METHACRYLATE (TYPE A resin) are mixed, 1000 g of silane (gamma-methacryloxypropyltrimethoxysilane); 100 g of cobalt octoate; 1000 g of tert-butyl peroxy-2-ethylhexanoate; 1000 g of tert-butyl perbenzoate; and 500 g of 2-2-(2H-benzotriazole-2-yl)-6-dodecyl-4-methylphenol being added and mixed for 30 seconds. Subsequently, 6 kg of liquid titanium dioxide, 2 kg of liquid red colouring and 3 kg of liquid yellow colouring are added and mixed for another 30 seconds, the mixture being distributed according to the mixers to be used and of the load of the ground materials.

The resin fillers with the additives are proportionally poured into each mixer and mixed for 15 minutes.

Once the mixing has been carried out in each mixer, the entire group is unloaded, layer upon layer, onto a homogenizer (Ring), the purpose of which being that the material, in its unloading from the mixers, is distributed homogeneously and layer by layer without any layer dominating the rest, being distributed uniformly and all the mixture colours manufactured in the planetary mixers being defined.

The mixture is distributed in boards of 308 cm x 139 cm and a thickness of 2 cm, which pass to the press wherein the vacuum will be carried out and the boards will be compressed to 6 kg/cm², being compacted by vibro-compression. This process lasts 2 minutes. Subsequently, the boards are passed to the catalysis oven which is at 77°C, wherein they will remain for 30 minutes, passing afterwards to the cooling area, where, after 36 hours, they are calibrated, polished and cut by conventional methods.

### Comparative examples

Boards have been manufactured which are similar to those of examples 1 and 2 but using two different polyester resins. Since the resins are different, different catalysts have been used and the ultraviolet radiation absorber has not been added in the comparative examples.

### Comparative example 1

The process of example 1 has been repeated with the exception that 100 kg of polyester resin SYNOLITE 0561 (DSM-BASF) with a viscosity of 250-400 centipoises has been used, using 1000 g of TRIGONOX (AZKO NOBEL) as a catalyst and the catalysis oven temperature was 85°C, the boards remaining in said oven for 25 minutes.

### Comparative example 2

The process of example 2 has been repeated with the exception that 100 kg of polyester resin ESTRATIL 2191-L (REPOSA NORSODYNE) with a viscosity between 250-400 centipoises has been used, using 1000 g of TRIGONOX (AZKO NOBEL) as a catalyst. The catalysis oven temperature was equally 85°C, the boards remaining in said oven for 25 minutes.

### Results

The remaining 20 boards of each one of the examples 1 and 2 and the comparative examples 1 and 2 were subjected to the same tests in order to compare their mechanical features, obtaining very similar values for the resistance to bending, the resistance to compression and the resistance to breaking by impact.

When they were subjected to an accelerated aging process in a Q.V. machine with UVB-313 ultraviolet lamps, differences were observed both in light colours (the boards with polyester resin yellowed from 50 hours of exposure onwards, whereas the methacrylate boards lasted up to 3000 hours of exposure without changes) and in dark colours (the boards with polyester resin lost their colour from 120 hours of exposure onwards, whereas the methacrylate boards lasted up to 700 hours of exposure without change, then starting to pale slightly until 2000 hours). The results can be observed in Table 1.

**Table 1**

| | example 1 METHACRYLATE (TYPE A + B) | example 2 METHACRYLATE (TYPE A) | COMPARATIVE EXAMPLE 1 POLYESTER | comparative example 2 POLYESTER |
|---|---|---|---|---|
| Light colours Continuous UV (50 hours) | No changes* | No changes* | Yellows | Yellows |
| Dark colours Continuous UV (120 hours) | No changes** | No changes** | Loses colour | Loses colour |

| | | | | |
|---|---|---|---|---|
| *the irradiation was continued up to 3000 hours and the yellowing was never observed. **the irradiation was continued up to 2000 hours and in the methacrylate boards, a slight loss of colour was observed from 700 hours. | | | | |

In order to carry out an extrapolation to sunlight, 100 hours of exposure in this type of machine would be equal to 2 years of exposure to sunlight outdoors. Therefore, the degradation of the board with polyester resin would begin after 1 year in the light colours and slightly more than 2 years in the dark colours. Comparatively, in the boards covered with methacrylate resin, the degradation would begin to be observed after 14 years in the dark colours, the light colour boards lasting for at least 30 years.

## Claims

1. A process for manufacturing artificial stone boards especially suitable for outdoors comprising a grinding phase of the different materials with varied granulometry forming the filler, another phase containing the resin with the catalyst and optionally the colouring, the mixing of said phases until the homogenization of the materials with the resin, a moulding and compaction phase of the paste obtained by vibro-compression under vacuum, and a hardening phase by polymerization of the resin by means of heat, ending with a cooling and polishing phase, **characterized by** the fact that the polymerizable resin is formed only by the liquid methacrylate resin.

2. A process for manufacturing artificial stone boards especially suitable for outdoors according to claim 1, **characterized in that** the liquid methacrylate resin is present between 6% and 20%.

3. A process for manufacturing artificial stone boards especially suitable for outdoors according to claims 1 and 2, **characterized in that** the liquid methacrylate resin has a viscosity comprised between 200 and 2000 centipoises (TYPE A), such as for example, polymethyl methacrylate, methyl methacrylate or 2,2-ethyleneoxydiethyl dimethacrylate.

4. A process for manufacturing artificial stone boards especially suitable for outdoors according to claims 1 and 2, **characterized in that** the liquid methacrylate resin is a mixture of 90-99% of a methacrylate resin with a viscosity comprised between 200 and 2000 centipoises (TYPE A) and 1-10% of a methacrylate resin with a viscosity lower than 200 centipoises (TYPE B), such as for example, propylidenetrimethyl trimethacrylate.

5. A process for manufacturing artificial stone boards especially suitable for outdoors according to claims 1 to 4, **characterized in that** the materials of varied granulometry forming part of the filler can be, among others, marble, dolomite, opaque quartz, crystalline quartz, silica, crystal, mirror, cristobalite, granite, feldspar, basalt, ferrosilicon etc., as long as they are compatible with the methacrylate resin.

6. A process for manufacturing artificial stone boards especially suitable for outdoors according to claims 1 to 5, **characterized in that** the materials of the foregoing claim form part of the composition with the following granulometry: a) 10% to 60% of the filler, of micronized or ground powder, with a granulometry comprised between 0.10 mm and 0.60 mm; b) 1% to 80% of the filler, ground with a granulometry comprised between 0.61 mm and 1.20 mm; and optionally, c) 10% to 50% of the ground material with a granulometry comprised between 1.21 mm and 15 mm.

7. A process for manufacturing artificial stone boards especially suitable for outdoors according to claims 1 to 6, **characterized in that** other filler materials can also be used, in the same granulometry and in the same amounts as indicated previously, such as coloured plastics, metals, woods, graphite etc.

8. A process for manufacturing artificial stone boards especially suitable for outdoors according to claims 1 to 7, **characterized in that** the mixture comprises colourings and/or micronized solid pigments, with a granulometry lower than 0.7 mm. Said pigments can be inorganic (such as for example, iron oxides and the like) or organic (such as for example phthalocyanines), being present in amounts comprised between 0.05% and 10% of the weight of the resin.

9. A process for manufacturing artificial stone boards especially suitable for outdoors according to claims 1 to 7, **characterized in that** the mixture comprises liquid inorganic or organic colourings dissolved in a vehicle compatible with the resin to be used (for example, diallyl phthalate, methacrylate monomer or the resin itself to be used.

10. A process for manufacturing artificial stone boards especially suitable for outdoors according to claims 1 to 9, **characterized in that** it contains a binder of cohesion between the resin and the fillers of varied granulometry of the mixture.

11. A process for manufacturing artificial stone boards especially suitable for outdoors according to claims 1 to 10, **characterized in that** said binder is an organofunctional silane, for example, gamma-methacryloxypropyltrimethoxysilane.

12. A process for manufacturing artificial stone boards especially suitable for outdoors according to claims 1 to 11, **characterized in that** the mixture of the methacrylate resin contains one or several catalysts, optionally ultraviolet ray absorbers and/or antioxidants.

13. A process for manufacturing artificial stone boards especially suitable for outdoors according to claims 1 to 12, **characterized in that** the catalysts are present in 0.5% to 5% of the weight of the resin, and the ultraviolet ray absorbers and antioxidants, when present, are in amounts of 0.1% to 2% of the weight of the resin.

14. A process for manufacturing artificial stone boards especially suitable for outdoors according to claims 1 to 13, **characterized in that** the mixture contains a catalyst for hardening the resin which is added to the resin.

15. A process for manufacturing artificial stone boards especially suitable for outdoors according to claims 1 to 14, **characterized in that** said catalyst can be powdered (for example, dilauryl peroxide type or dicarbonate peroxide type), or liquid (for example, tert-butyl perbenzoate type or tert-butyl peroxy-2-ethylhexanoate type), said hardener being present in amounts of 0.5% to 5% of the weight of the resin.

16. A process for manufacturing artificial stone boards especially suitable for outdoors according to claims 1 to 15, **characterized in that** the mixture contains a polymerization accelerator which is added to the resin.

17. A process for manufacturing artificial stone boards especially suitable for outdoors according to claims 1 to 16, **characterized in that** said accelerator is a cobalt compound, such as for example cobalt octoate, in amounts of 0.05% to 0.5%.

18. Artificial stone boards especially suitable for outdoors manufactured according to the process of claims 1 to 17, **characterized in that** they comprise:
| | | |
|---|---|---|
| silica micronisate (quartz) | | 10-40% |
| ground silica (quartz), 0.1-0.60 mm | | 10-40% |
| ground silica (quartz), 0.61-1.20 mm | | 1-80% |
| methacrylate resin* | | 6-20% |
| *the resin can be | :TYPE A | (100%) |
| | TYPE A | (90-99%) + TYPE B (1-10%) |
Furthermore, with respect to the weight of the resin, the mixture contains:
| | |
|---|---|
| Catalyst | 0.5-5% |
| Accelerator | 0.05-0.5% |
| Binder | 0.5-5% |
| UV radiation absorbers | 0.1-2% |
| Colouring | 0.05-10% |

19. Artificial stone boards especially suitable for outdoors manufactured according to claim 18, **characterized in that** they comprise:
| | |
|---|---|
| silica micronisate (quartz) | 25% |
| ground silica (quartz), 0.1-0.60 mm | 20% |
| ground silica (quartz), 0.61-1.20 mm | 45% |
| methacrylate resin*(95% TYPE A + 5% TYPE B) | 10% |
| *it contains (with respect to the weight of the resin): | |
|---|---|
| di(4-tert-butyl-cyclohexyl) peroxydicarbonate | 1% |
| tert-butyl perbenzoate | 1% |
| methacryloxypropyltrimethoxysilane | 1% |
| cobalt octoate | 0.1% |
| 2-benzotriazole-2-yl-4-6-di-tert-butylphenol | 0.5% |
| black iron oxide pigment (powder) | 1% |
| carbon black pigment (powder) | 0.5% |
| green chromium oxide pigment (powder) | 3% |

20. Artificial stone boards especially suitable for outdoors manufactured according to claim 18, **characterized in that** they comprise:
| | |
|---|---|
| silica micronisate (quartz) | 25% |
| ground mirror, 0.1-0.60 mm | 20% |
| ground mirror, 0.61-1.20 mm | 15% |
| ground mirror, 1.21-3.00 mm | 30% |
| methacrylate resin*(100% TYPE A) | 6-20% |
| *it contains (with respect to the weight of the resin): | |
|---|---|
| tert-butyl peroxy-2-ethylhexanoate | 1% |
| tert-butyl perbenzoate | 1% |
| methacryloxypropyltrimethoxysilane | 1% |
| cobalt octoate | 0.1% |
| 2-(2H-benzotriazole-2-yl)-6-dodecyl-4-methylphenol | 0.5% |
| titanium dioxide (liquid) | 6% |
| red colouring (liquid) | 2% |
| yellow colouring (liquid) | 3% |
